# EUROPEAN PATENT APPLICATION

(11) **EP 4 632 843 A1**
(43) Date of publication of application: **15.10.2025**
(21) Application number: 24744908.5
(22) Date of filing: 18.01.2024
(51) Int. Cl.: H01M 4/505, H01M 4/525, H01M 4/131, H01M 10/052, H01M 4/02

(54) **CATHODE ACTIVE MATERIAL, AND CATHODE AND LITHIUM SECONDARY BATTERY COMPRISING SAME**

(30) Priority: 20.01.2023 KR 20230008740
(71) Applicant: LG CHEM, LTD., Seoul 07336 (KR)
(72) Inventor: KIM, Kyu Ri, Daejeon 34122 (KR); YANG, Jeong Jin, Daejeon 34122 (KR); KIM, Min Seong, Daejeon 34122 (KR); YOON, Ju Han, Daejeon 34122 (KR); JEONG, Myeong Sang, Daejeon 34122 (KR); KIM, Jeong Hun, Daejeon 34122 (KR)
(74) Representative: Hoffmann Eitle
(86) International application number: PCT/KR2024/000912
(87) International publication number: WO 2024/155129

(57) **Abstract**

The present invention relates to a cathode active material, and a cathode and a lithium secondary battery comprising same, the cathode active material comprising a lithium-rich manganese-based oxide, which has a composition represented by chemical formula 1 described in the present specification, thereby enabling the performance of a lithium secondary battery comprising same to be improved.

## Description

### TECHNICAL FIELD

### Cross-reference to Related Applications

This application claims priority from Korean Patent Application No. 10-2023-0008740, filed on January 20, 2023, the disclosure of which is incorporated by reference herein.

### Technical Field

The present invention relates to a positive electrode active material, and a positive electrode and a lithium secondary battery which include the same.

### BACKGROUND ART

A lithium secondary battery is composed of four major components such as a positive electrode, a negative electrode, a separator, and an electrolyte. Among them, a positive electrode active material included in the positive electrode is a material that plays a major role in determining capacity, output, and lifetime of the battery. An improvement in performance of the positive electrode active material is essential in order for the lithium secondary battery to have high energy density, output, and lifetime, and, as a result, a significant amount of research has been conducted recently to develop a high-performance positive electrode active material.

A lithium-rich oxide (Li rich layered oxide), a type of the positive electrode active material, is a mixed phase in which a Li₂MnO₃ phase and a LiMO₂ (M = nickel (Ni), manganese (Mn), cobalt (Co)) phase are mixed, wherein it has a characteristic of providing a very high capacity of 250 mAh/g at a high operating voltage (>3.5 V vs. Li/Li⁺). Thus, the lithium-rich oxide has received attention as a low-cost, high-capacity positive electrode active material.

However, the lithium-rich oxide has problems arising from structural characteristics in which two phases are mixed. Specifically, when a battery including the lithium-rich oxide is operated at a high voltage, there is a problem in that irreversible capacity loss occurs in a first formation process to reduce efficiency, and there is a problem in that O₂ gas is generated while voltage fading occurs as a layered structure changes to a rock-salt structure via a spinel structure during charge and discharge cycles.

Thus, there is a need to secure a technique that improves performance and stability of the lithium-rich oxide.

### [Prior Art Documents]

### [Patent Documents]

(Patent Document 1) Chinese Patent Application Laid-open Publication No. 109921007

### DISCLOSURE OF THE INVENTION

### TECHNICAL PROBLEM

An aspect of the present invention is to improve performance and stability of a lithium-rich manganese-based oxide and, as a result, to improve performance of a battery including the lithium-rich manganese-based oxide.

Also, the present invention aims at providing a positive electrode and a lithium secondary battery which include the above positive electrode active material.

### TECHNICAL SOLUTION

In order to solve the above-described tasks, the present invention provides a positive electrode active material, a positive electrode, and a lithium secondary battery.
(1) The present invention provides a positive electrode active material including a lithium-rich manganese-based oxide having a composition represented by Formula 1.

   [Formula 1] Li₁₊ₐ₁Mnₓ₁Ni_{y1}M_{z1}O_{2+b1}

   In Formula 1,
   0.100≤a1≤0.400, 0≤b1<1.0, 0.50≤x1<1.0, 0<y1<0.50, 0.001≤z1≤0.01, and 1.50≤x1/y1, and
   M is a metal with an oxidation number of +5 or +6.
(2) The present invention provides the positive electrode active material of (1) above, wherein x1 is 0.55 or more.
(3) The present invention provides the positive electrode active material of (1) or (2) above, wherein z1 is in a range of 0.002 to 0.009.
(4) The present invention provides the positive electrode active material of any one of (1) to (3) above, wherein x1/y1 is 1.80 or more.
(5) The present invention provides the positive electrode active material of any one of (1) to (4) above, wherein the lithium-rich manganese-based oxide is cobalt-free (Co-Free).
(6) The present invention provides the positive electrode active material of any one of (1) to (5) above, wherein M is at least one selected from Mo, Nb, Ti, V, W, Ta, and Ru.
(7) The present invention provides the positive electrode active material of any one of (1) to (6) above, wherein the lithium-rich manganese-based oxide has an average particle diameter (D₅₀) of 1 µm to 15 µm.
(8) The present invention provides the positive electrode active material of any one of (1) to (7) above, wherein, in a case in which Formula 1 is expressed as Formula 2, a ratio of x:(1-x) is in a range of 1:9 to 5:5.

   [Formula 2] xLi₂MnO₃ · (1-x)Li(Niₓ₂Mn_{y2}M_{z2})O₂

   In Formula 2,
   0.100≤x≤0.400, 0<x2≤0.55, 0.10≤y2<1.0, 0<z2≤0.015, and x2+y2+z2=1, and
   M is a metal with an oxidation number of +5 or +6.
(9) The present invention provides a positive electrode including the positive electrode active material of any one of (1) to (8) above.
(10) The present invention provides a lithium secondary battery including the positive electrode of (9) above.

### ADVANTAGEOUS EFFECTS

Since a positive electrode active material of the present invention includes a lithium-rich manganese-based oxide having a composition represented by Formula 1 that is described in the present specification, it may improve performance, for example, charge/discharge capacity, initial efficiency, and discharge capacity retention of a lithium secondary battery including the same.

### BRIEF DESCRIPTION OF THE DRAWINGS

FIG. 1 is a scanning electron microscope (SEM) image of a positive electrode active material prepared in Example 1.
FIG. 2 is X-ray diffraction (XRD) data for each of positive electrode active materials prepared in Examples 1, 4, 5, and 8.
FIG. 3 is XRD data for each of positive electrode active materials prepared in Example 5 and Comparative Example 5.

### BEST MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present specification, the expression 'average particle diameter (D₅₀)' denotes a particle diameter at 50% of cumulative distribution of volume according to the particle diameter. After dispersing measurement target powder in a dispersion medium, the dispersion medium is introduced into a commercial laser diffraction particle size measurement instrument (e.g., Microtrac S3500), a particle size distribution is calculated by measuring a difference in diffraction patterns due to a particle size when particles pass through a laser beam, and the D₅₀ may be measured by calculating a particle diameter at 50% of the cumulative distribution of volume according to the particle diameter using the measurement instrument.

### Positive Electrode Active Material

A positive electrode active material according to the present invention is characterized in that it includes a lithium-rich manganese-based oxide having a composition represented by Formula 1 below.

[Formula 1] Li₁₊ₐ₁Mnₓ₁Ni_{y1}M_{z1}O_{2+b1}

In Formula 1,
0.100≤a1≤0.400, 0≤b1<1.0, 0.50≤x1<1.0, 0<y1<0.50, 0.001≤z1≤0.01, and 1.50≤x1/y1, and
M is a metal with an oxidation number of +5 or +6.

The inventors of the present invention found that, in a case in which a lithium-rich manganese-based oxide among lithium-rich oxides has the composition represented by Formula 1, charge/discharge capacity, initial efficiency, and discharge capacity retention of a battery including the above positive electrode active material may be improved, thereby leading to the completion of the present invention.

Since the lithium-rich manganese-based oxide containing lithium, nickel, and manganese is doped with at least one doping element with an oxidation number of +5 or +6 and contains the manganese in an amount of 50 mol% or more based on a total amount of metals excluding lithium while a molar ratio of the manganese to the nickel satisfies 1.5 or more at the same time, stability of the lithium-rich manganese-based oxide itself is improved, and, as a result, it may improve performance of a battery. Specifically, since an amount of lithium, which may be deintercalated in a formation process, is increased as an amount of lithium, which may be added in excess, is increased, charge/discharge capacity of a positive electrode is not only increased, but it also contributes to improve structural stability in a process of deintercalation of the doped element, and, thus, conduction of lithium ions is increased during cycles.

In a case in which the lithium-rich manganese-based oxide is not doped with at least one doping element with an oxidation number of +5 or +6, or the amount of the manganese is less than 50 mol% based on the total amount of the metals excluding lithium, or the molar ratio of the manganese to the nickel is 1.5 or more, when a battery including the lithium-rich oxide is operated at a high voltage, there is a problem in that irreversible capacity loss occurs in a first formation process to reduce efficiency, or O₂ gas is generated while voltage fading occurs as a layered structure changes to a rock-salt structure via a spinel structure during charge and discharge cycles.

According to the present invention, a1 is in a range of 0.100 to 0.400. a1 may specifically be 0.100, 0.105, 0.110, 0.115, 0.120, 0.125, 0.128 or more, 0.135, 0.140, 0.150, 0.200, 0.250, 0.300, 0.350, and 0.400 or less. In this case, since lithium exists in excess, formation and operation are possible at a high operating voltage.

According to the present invention, b1 is in a range of 0 or more to less than 1.0. b1 may specifically be 0 or more, 0.10, 0.20, 0.30, 0.40, 0.50, 0.60, 0.70, 0.80, 0.90 or less, and less than 1.0.

According to the present invention, x1 is a ratio of the number of moles of manganese to the total number of moles of metals excluding lithium which are included in the lithium-rich manganese-based oxide, wherein x1 is in a range of 0.50 or more to less than 1.0. x1 may specifically be 0.50, 0.51, 0.52, 0.53, 0.54, 0.55 or more, 0.60, 0.65, 0.70, 0.80, 0.90 or less, and less than 1.0. Since the lithium-rich manganese-based oxide according to the present invention has a large amount of manganese, more lithium may be added, and, accordingly, more lithium may be deintercalated to increase charge/discharge capacity.

According to the present invention, y1 is a ratio of the number of moles of nickel to the total number of moles of metals excluding lithium which are included in the lithium-rich manganese-based oxide, wherein y1 is greater than 0 and less than 0.5. y1 may specifically be greater than 0, 0.10, 0.20, 0.30 or more, 0.35, 0.40 or less, and less than 0.50. The lithium-rich manganese-based oxide according to the present invention contains nickel, but contains the nickel such that an amount of the nickel satisfies the above-described range, wherein, in this case, the initial efficiency and discharge capacity retention of the battery may be further improved.

According to the present invention, z1 is a ratio of the number of moles of M (metal with an oxidation number of +5 or +6) to the total number of moles of metals excluding lithium which are included in the lithium-rich manganese-based oxide, wherein z1 is in a range of 0.001 to 0.01. z1 may be 0.0010, 0.0015, 0.0020, 0.0021, 0.0022 or more, 0.0090, 0.0095, and 0.010 or less. In this case, the charge/discharge capacity, initial efficiency, and discharge capacity retention of the battery may be further improved.

According to the present invention, z1 may more specifically be in a range of 0.0020 to 0.0090. In this case, stability may be increased during structural changes that may occur in a lithium deintercalation process.

According to the present invention, x1/y1 is a ratio of the number of moles of manganese to the number of moles of nickel contained in the lithium-rich manganese-based oxide, wherein x1/y1 is 1.50 or more. x1/y1 may be 1.50, 1.60, 1.70, 1.80 or more, 1.90, 2.00, 2.10, 2.20, 2.30, 2.40, 2.50, 2.60, 2.70, 2.80, 2.90, 3.00, and 3.10 or less. In this case, since the amount of the manganese is large, more lithium may be added, and, accordingly, more lithium may be deintercalated to increase the charge/discharge capacity.

According to the present invention, x1/y1 may more specifically be 1.80 or more. In this case, since the amount of the manganese is large, more lithium may be added, and, accordingly, more lithium may be deintercalated to increase the charge/discharge capacity.

According to the present invention, the lithium-rich manganese-based oxide may be cobalt-free (Co-Free). That is, the lithium-rich manganese-based oxide may not contain expensive cobalt. In a case in which the lithium-rich manganese-based oxide does not contain cobalt, there is an advantage in terms of economic factors.

According to the present invention, M may be at least one selected from molybdenum (Mo), niobium (Nb), titanium (Ti), vanadium (V), tungsten (W), tantalum (Ta), and ruthenium (Ru). In this case, since the oxidation number is high and there are multiple oxidation numbers of ions participating in an oxidation/reduction reaction, the structure of the lithium-rich manganese-based oxide may be stabilized.

In a case in which M is Mo, the structural stability is further improved during a delithiation process, and there is an advantage in that conductivity of lithium ions increases during cycles due to a long bond length of Mo-O. Also, in a case in which M is Nb, it helps accelerate lithium ion diffusion and may contribute to structural stabilization by a strong Nb-O bond. For reference, since Ni²⁺ ions are decreased and Ni³⁺ ions are increased to reduce Li⁺/Ni²⁺ mixing, it helps in structural stabilization.

According to the present invention, the lithium-rich manganese-based oxide may have an average particle diameter (D₅₀) of 1.00 µm to 15.0 µm. The lithium-rich manganese-based oxide may specifically have an average particle diameter (D₅₀) of 1.00 µm, 2.00 µm, 3.00 µm, 4.00 µm, 5.00 µm, 6.00 µm or more, 7.00 µm, 8.00 µm, 9.00 µm, 10.0 µm, 11.0 µm, 12.0 µm, 13.0 µm, 14.0 µm, and 15.0 µm or less. In this case, since an electrode with excellent tap density may be prepared, there is an advantage in that processability may be secured.

According to the present invention, in a case in which Formula 1 is expressed as Formula 2 below, a ratio of x:(1-x) may be 1:9 to 5:5, specifically, 1:9, 2:8 or more, 4:6, and 5:5 or less. In this case, the charge/discharge capacity, initial efficiency, and discharge capacity retention of the battery including the positive electrode active material may be further improved.

[Formula 2] xLi₂MnO₃·(1-x)Li(Niₓ₂Mn_{y2}M_{z2})O₂

In Formula 2,
0.100≤x≤0.400, 0<x2≤0.55, 0.10≤y2<1.0, 0<z2≤0.015, and x2+y2+z2=1, and
M is a metal with an oxidation number of +5 or +6.

According to the present invention, the lithium-rich manganese-based oxide is in a form of a spherical secondary particle which is formed by aggregation of tens to hundreds of primary particles, wherein the primary particle may have an intermediate shape between a rod shape and a needle shape with a high aspect ratio in which a length measured from a scanning electron microscope (SEM) image is about few tens to 200 nm. In this case, there is an advantage in that reactivity is improved due to active electron movement caused by an increase in specific surface area.

The positive electrode active material according to the present invention may have a Brunauer-Emmett-Teller (BET) specific surface area of 0.5 m²/g to 3.0 m²/g. That is, the positive electrode active material according to the present invention may have a BET specific surface area significantly larger than a previously known NCM(A)-based positive electrode active material. In this case, since electron movement becomes active during battery operation, kinetics is improved and rate capability may be improved. The BET specific surface area may be analyzed using gas adsorption, and may be one in which a degree of adsorption of gas molecules according to pressure changes at extremely low temperature (77K) is measured for analysis.

The positive electrode active material according to the present invention may include a core-shell structure. In this case, compositions of the core and the shell may be the same, and only their shapes may be different. The core may have higher porosity than the shell. In this case, since it shows stable kinetics while having high tap density, the charge/discharge capacity may also be excellent.

### Positive Electrode

The present invention provides a positive electrode including the positive electrode active material.

The positive electrode may include a positive electrode collector and a positive electrode active material layer formed on the positive electrode collector, wherein the positive electrode active material layer may include the above positive electrode active material.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode active material, if necessary. In this case, the positive electrode active material may be included in an amount of 80 wt% to 99 wt%, more specifically, 85 wt% to 98.5 wt% based on a total weight of the positive electrode active material layer, and excellent capacity characteristics may be obtained within this range.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves adhesion between positive electrode active material particles and adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a positive electrode slurry, which is prepared by dissolving or dispersing the positive electrode active material as well as optionally the binder and the conductive agent in a solvent, is applied to the positive electrode collector, and the positive electrode may then be prepared by drying and rolling the coated positive electrode collector, or the positive electrode may be prepared by casting the positive electrode slurry on a separate support and then laminating a film separated from the support on the positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have a viscosity that may provide excellent thickness uniformity during the subsequent coating for the preparation of the positive electrode.

### Lithium Secondary Battery

The present invention provides a lithium secondary battery including the positive electrode.

The lithium secondary battery may include the positive electrode; a negative electrode; a separator disposed between the positive electrode and the negative electrode, and an electrolyte. Also, the lithium secondary battery may further optionally include a battery container accommodating an electrode assembly of the positive electrode, the negative electrode, and the separator, and a sealing member sealing the battery container.

The negative electrode may include a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve adhesion of a negative electrode active material. The negative electrode collector, for example, may be used in various shapes such as that of a film, a sheet, a foil, a net, a porous body, a foam body, a non-woven fabric body, and the like.

The negative electrode active material layer may optionally include a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on a total weight of the negative electrode active material layer.

The binder of the negative electrode active material layer is a component that assists in binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent of the negative electrode active material layer is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The negative electrode may be prepared by coating a negative electrode slurry, which is prepared by dissolving or dispersing optionally the binder and the conductive agent as well as the negative electrode active material in a solvent, on the negative electrode collector and drying the coated negative electrode collector, or may be prepared by casting the negative electrode slurry on a separate support and then laminating a film separated from the support on the negative electrode collector.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N (CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and LiPF₆, LiClO₄ LiAsF₆, LiBF₄, LiSbF₆, LiAlO₄, LiAlCl₄, LiCF₃SO₃, LiC₄F₉SO₃, LiN (C₂F₅SO₃)₂, LiN (C₂F₅SO₂)₂, LiN (CF₃SO₂)₂, LiCl, LiI, or LiB(C₂O₄)₂ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

Since the lithium secondary battery including the positive electrode active material according to the present invention stably exhibits excellent charge/discharge capacity, initial efficiency, and discharge capacity retention, the lithium secondary battery is suitable for portable devices, such as mobile phones, notebook computers, and digital cameras, and electric cars such as hybrid electric vehicles (HEVs) and electric vehicles (EVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples

### Example 1

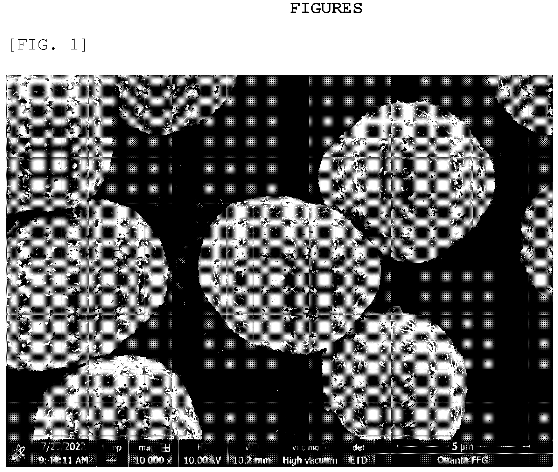

After mixing Mn_{0.65}Ni_{0.35}(OH)₂, a composite transition metal hydroxide precursor, and MoO₃, a doping material, using a mixer (SHINIL ELECTRONICS CO., LTD., 353NK) such that a molar ratio of (Mn+Ni):Mo was 1:0.0025, LiOH, a lithium raw material, was additionally added such that a molar ratio of (Mn+Ni):Li was 1:1.34 and mixed using an acoustic mixer (Resodyn Corporation, LabRAM 2) to prepare a mixture. The mixture was primarily sintered at 480°C for 3 hours and 30 minutes, and then secondarily sintered at 900°C for 9 hours to prepare a positive electrode active material (lithium-rich manganese-based oxide). An SEM image of the positive electrode active material is illustrated in FIG. 1.

For reference, when the temperature was increased from room temperature to 480°C and from 480°C to 900°C, a heating rate was 2°C/min.

### Example 2

A positive electrode active material was prepared in the same manner as in Example 1 except that, in Example 1, Mn_{0.65}Ni_{0.35}(OH)₂, the composite transition metal hydroxide precursor, and MoO₃, the doping material, were mixed such that the molar ratio of (Mn+Ni):Mo was 1:0.005.

### Example 3

A positive electrode active material was prepared in the same manner as in Example 1 except that, in Example 1, Mn_{0.65}Ni_{0.35}(OH)₂, the composite transition metal hydroxide precursor, and MoO₃, the doping material, were mixed such that the molar ratio of (Mn+Ni):Mo was 1:0.0075.

### Example 4

A positive electrode active material was prepared in the same manner as in Example 1 except that, in Example 1, Mn_{0.65}Ni_{0.35}(OH)₂, the composite transition metal hydroxide precursor, and MoO₃, the doping material, were mixed such that the molar ratio of (Mn+Ni):Mo was 1:0.01.

### Example 5

A positive electrode active material was prepared in the same manner as in Example 1 except that, in Example 1, Nb₂O₅, instead of MoO₃, was used as the doping material, and Mn_{0.65}Ni_{0.35}(OH)₂, the composite transition metal hydroxide precursor, and Nb₂O₅, the doping material, were mixed such that a molar ratio of (Mn+Ni):Nb was 1:0.0025.

### Example 6

A positive electrode active material was prepared in the same manner as in Example 1 except that, in Example 1, Nb₂O₅, instead of MoO₃, was used as the doping material, and Mn_{0.65}Ni_{0.35}(OH)₂, the composite transition metal hydroxide precursor, and Nb₂O₅, the doping material, were mixed such that the molar ratio of (Mn+Ni):Nb was 1:0.005.

### Example 7

A positive electrode active material was prepared in the same manner as in Example 1 except that, in Example 1, Nb₂O₅, instead of MoO₃, was used as the doping material, and Mn_{0.65}Ni_{0.35}(OH)₂, the composite transition metal hydroxide precursor, and Nb₂O₅, the doping material, were mixed such that the molar ratio of (Mn+Ni):Nb was 1:0.0075.

### Example 8

A positive electrode active material was prepared in the same manner as in Example 1 except that, in Example 1, Nb₂O₅, instead of MoO₃, was used as the doping material, and Mn_{0.65}Ni_{0.35}(OH)₂, the composite transition metal hydroxide precursor, and Nb₂O₅, the doping material, were mixed such that the molar ratio of (Mn+Ni):Nb was 1:0.01.

### Comparative Example 1

A positive electrode active material was prepared in the same manner as in Example 1 except that, in Example 1, the doping raw material was not added.

### Comparative Example 2

A positive electrode active material was prepared in the same manner as in Example 1 except that, in Example 1, Mn_{0.65}Ni_{0.35}(OH)₂, the composite transition metal hydroxide precursor, and MoO₃, the doping material, were mixed such that the molar ratio of (Mn+Ni):Mo was 1:0.0005.

### Comparative Example 3

A positive electrode active material was prepared in the same manner as in Example 1 except that, in Example 1, Mn_{0.65}Ni_{0.35}(OH)₂, the composite transition metal hydroxide precursor, and MoO₃, the doping material, were mixed such that the molar ratio of (Mn+Ni):Mo was 1:0.015.

### Comparative Example 4

A positive electrode active material was prepared in the same manner as in Example 1 except that, in Example 1, Nb₂O₅, instead of MoO₃, was used as the doping material, and Mn_{0.65}Ni_{0.35}(OH)₂, the composite transition metal hydroxide precursor, and Nb₂O₅, the doping material, were mixed such that the molar ratio of (Mn+Ni):Nb was 1:0.0005.

### Comparative Example 5

A positive electrode active material was prepared in the same manner as in Example 1 except that, in Example 1, Nb₂O₅, instead of MoO₃, was used as the doping material, and Mn_{0.65}Ni_{0.35}(OH)₂, the composite transition metal hydroxide precursor, and Nb₂O₅, the doping material, were mixed such that the molar ratio of (Mn+Ni):Nb was 1:0.015.

### Comparative Example 6

A positive electrode active material was prepared in the same manner as in Example 1 except that, in Example 1, Ni_{0.65}Mn_{0.35}(OH)₂, instead of Mn_{0.65}Ni_{0.35}(OH)₂, was used as the composite transition metal hydroxide precursor.

### Experimental Examples

### Experimental Example 1: XRD Analysis

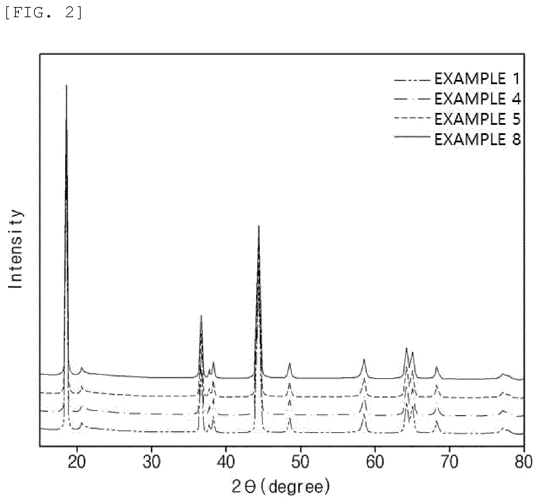

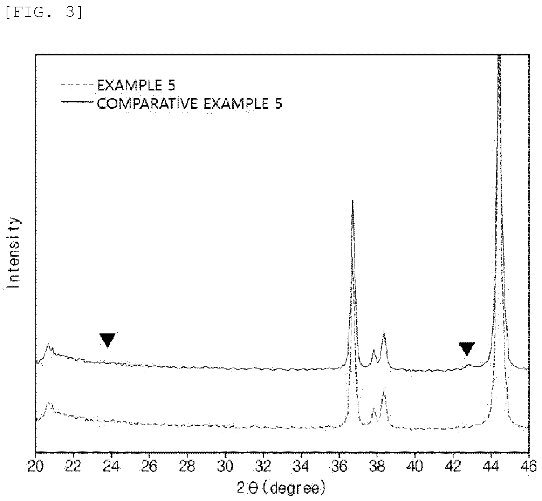

After X-ray diffraction (XRD) measurement was performed for each of the positive electrode active materials prepared in Examples 1, 4, 5, and 8, XRD data are illustrated in FIG. 2. Also, after XRD measurement was performed for each of the positive electrode active materials prepared in Example 5 and Comparative Example 5, XRD data are illustrated in FIG. 3.

In this case, the XRD was measured by collecting 2 g to 3 g of positive electrode active material particles from each positive electrode active material powder and using an X-ray diffraction analysis method in a 28 range of 15° to 80° at a scan speed of 0.2°/sec and an acceleration voltage of 40 kV/40 mA using Cu-Kα radiation (wavelength 1.54 Å).

Referring to FIG. 2 and FIG. 3, it may be confirmed that the positive electrode active materials prepared according to the present invention were lithium-rich oxides including a Li₂MnO₃ phase and a LiM'O₂ phase (M' includes Ni, Mn, and M, wherein M is the same as defined in Formula 1) at the same time. Also, since splitting of (006)/(012) peak and (018) / (110) peak was clearly observed, it may be confirmed that the lithium-rich oxides with a layered structure were formed. In addition, since there is no impurity peak due to doping, it may be considered that the sintering was performed well during the preparation of the positive electrode active materials. In contrast, with respect to Comparative Example 5 which was excessively doped, it may be confirmed that Li₃NbO₄ peaks (see red arrows near 20° to 25° and 40° to 45°) were generated. That is, with respect to Comparative Example 5, it was expected that Nb was not doped into the active material, but existed in agglomerates.

For reference, a peak with the highest intensity at 17° to 18° is a Li(NiMn)O₂ Rhomboheral (R3-m) phase peak, a small peak at 20° to 23° is a peak corresponding to the Li₂MnO₃ phase, peaks at 37.5° to 39° are a mixture of peaks corresponding to (006) and (012) of the (R3-m) phase, (002) and (131-) of the Li₂MnO₃ phase, and a (C2/m) phase, and peaks at 63° to 67° are a mixture of peaks corresponding to (018), (110), (133-), and (331-) of the Li₂MnO₃ phase. In this case, a minus in parentheses (-) means an over bar.

### Experimental Example 2: ICP Analysis

After taking 0.1 g of each of the positive electrode active materials prepared in Examples 1 to 8 and Comparative Examples 1 to 6, 1 ml of hydrochloric acid was added and heated to dissolve the positive electrode active material. Thereafter, in order to promote a reaction, a small amount of hydrogen peroxide was added to completely dissolve the positive electrode active material to prepare a solution. Subsequently, an analysis sample was prepared by diluting the solution with deionized water such that a total volume of the solution became 10 ml. Weight ratios of constituent elements present in the analysis sample were measured using an inductively coupled plasma (ICP) instrument, and a composition of the positive electrode active material, a Li/Me molar ratio (Me = Mn+Ni), a Mn/Ni molar ratio, and a weight (ppm) of the doping element are presented in Table 1 below.

**[Table 1]**

| Category | Positive electrode active material composition | Li/Me mole ratio | Mn/Ni mole ratio | Mo (ppm) | Nb (ppm) |
|---|---|---|---|---|---|
| Example 1 | Li_{1.13}Mn_{0.565},Ni_{0.3043}Mo_{0.0022}O₂(0. 3Li₂MnO₃·0.7Li(Ni_{0.5000}Mn_{0.4998} Mo_{0.0036})O₂) | 1.296 | 1.86 | 2750 | - |
| Example 2 | Li_{1.13}Mn_{0.5650}Ni_{0.3041}Mo_{0.0043}O₂ (0.3Li₂MnO₃·0.7Li(Ni_{0.4996}Mn_{0. 4996}Mo_{0.0071})O₂) | 1.294 | 1.86 | 5440 | - |
| Example 3 | Li_{1.13}Mn_{0.5649}Ni_{0.3040}Mo_{0.0065}O₂(0. 3Li₂MnO₃·0.7Li(Ni_{0.4995}Mn_{0.4994} Mo_{0.0107})O₂) | 1.291 | 1.86 | 7890 | - |
| Example 4 | Li_{1.13}Mn_{0.5651}Ni_{0.3043}Mo_{0.0087}O₂(0. 3Li₂MnO₃·0.7Li(Ni_{0.5000}Mn_{0.4998} Mo_{0.0143})O₂) | 1.287 | 1.86 | 10505 | - |
| Example 5 | Li_{1.13}Mn_{0.5652}Ni_{0.3042}Nb_{0.0022}O₂ (0.3Li₂MnO₃·0.7Li(Ni_{0.4998}Mn_{0. 5000}Nb_{0.0036})O₂) | 1.296 | 1.86 | - | 1280 |
| Example 6 | Li_{1.13}Mn_{0.5651}Ni_{0.3042}Nb_{0.0043}O₂ (0.3Li₂MnO₃·0.7Li(Ni_{0.4998}Mn_{0. 4998}Nb_{0.0071})O₂) | 1.293 | 1.86 | - | 2620 |
| Example 7 | Li_{1.13}Mn_{0.5651}Ni_{0.3043}Nb_{0.0065}O₂(0. 3Li₂MnO₃·0.7Li(Ni_{0.4999}Mn_{0.4998} Nb_{0. 0107})O₂) | 1.290 | 1.86 | - | 3900 |
| Example 8 | Li_{1.13}Mn_{0.5652}Ni_{0.3040}Nb_{0.0087}O₂(0. 3Li₂MnO₃·0.7Li(Ni_{0.4994}Mn_{0.5000} Nb_{0.0143})O₂) | 1.287 | 1.86 | - | 5250 |
| Comparative Example 1 | Li_{1.13}Mn_{0.5652}Ni_{0.3043}O₂(0.3Li₂Mn O₃·0.7Li(Ni_{0.5}Mn_{0.5})O₂) | 1.3 | 1.86 | - | - |
| Comparative Example 2 | Li_{1.13}Mn_{0.5652}Ni_{0.3042}Mo_{0.0004}O₂ (0.3Li₂MnO₃·0.7Li(Ni_{0.4998}Mn_{0. 5000}Mo_{0.0007})O₂) | 1.299 | 1.86 | 544 | - |
| Comparative Example 3 | Li_{1.13}Mn_{0.5652}Ni_{0.3042}Mo_{0.013}O₂ (0.3Li₂MnO₃·0.7Li(Ni_{0.4998}Mn_{0. 5000}Mo_{0.0214})O₂) | 1.281 | 1.86 | 16620 | - |
| Comparative Example 4 | Li_{1.13}Mn_{0.5652}Ni_{0.3043}Nb_{0.0004}O₂ (0.3Li₂MnO₃·0.7Li(Ni_{0.4999}Mn_{0. 5000}Nb_{0.0007})O₂) | 1.299 | 1.86 | - | 250 |
| Comparative Example 5 | Li_{1.13}Mn_{0.5652}Ni_{0.3043}Nb_{0.0130}O₂ (0.3Li₂MnO₃·0.7Li(Ni_{0.4999}Mn_{0. 5000}Nb_{0.0214})O₂) | 1.280 | 1.86 | - | 7910 |
| Comparative Example 6 | LiNi_{0.4925}Mn_{0.5025}Mo_{0.0070}O₂ (0.01Li₂MnO₃·0.99Li(Ni_{0.5000}M n_{0.5000}Mo_{0.0071})O₂) | 0.998 | 1.02 | 2660 | - |

### Experimental Example 3: Average Particle Diameter (D₅₀) Analysis

A sample of each of the positive electrode active materials prepared in Examples 1 to 8 and Comparative Examples 1 to 6 was prepared, and an average particle diameter (D₅₀) was obtained by using a particle size analyzer (Microtrac, S3500), and is presented in Table 2 below.

### Experimental Example 4: BET Specific Surface Area Analysis

A specific surface area was measured by a Brunauer-Emmett-Teller (BET) method in which the BET specific surface area was calculated from a nitrogen gas adsorption amount at a liquid nitrogen temperature (77K) using BELSORP-mini II by Bell Japan Inc., and presented in Table 2 below.

Specifically, a sample of each of the positive electrode active materials prepared in Examples 1 to 8 and Comparative Examples 1 to 6 was prepared, and a pretreatment was performed by putting 3 g of each sample into each of three tubes and holding it in vacuum at 200°C for more than 2 hours. Thereafter, the sample was cooled to room temperature, weighed, and placed in a BET measurement instrument. Then, liquid nitrogen was filled such that the sample may be sufficiently submerged in the liquid nitrogen and measurement was then performed. Each BET specific surface area value in Table 2 below is a value that was obtained by averaging values of three samples.

**[Table 2]**

| Category | D₅₀ (µm) | BET specific surface area (m²/g) |
|---|---|---|
| Example 1 | 6.82 | 1.68 |
| Example 2 | 6.88 | 1.63 |
| Example 3 | 6.89 | 1.60 |
| Example 4 | 6.78 | 1.58 |
| Example 5 | 6.79 | 1.66 |
| Example 6 | 6.80 | 1.64 |
| Example 7 | 6.80 | 1.60 |
| Example 8 | 6.82 | 1.59 |
| Comparative Example 1 | 6.81 | 1.62 |
| Comparative Example 2 | 6.90 | 1.63 |
| Comparative Example 3 | 6.92 | 1.57 |
| Comparative Example 4 | 6.88 | 1.63 |
| Comparative Example 5 | 6.87 | 1.55 |
| Comparative Example 6 | 6.87 | 1.44 |

### Experimental Example 5: Coin-type Half-cell Preparation and Capacity Characteristics Evaluation

Each of the positive electrode active materials prepared in Examples 1 to 8 and Comparative Examples 1 to 6, a conductive agent (Super P), and a binder (polyvinylidene fluoride (PVDF)) were mixed in a N-methylpyrrolidone (NMP) solvent in a weight ratio of 92.5:3.0:4.5 to prepare a positive electrode slurry. One surface of an aluminum current collector was coated with the above-prepared positive electrode slurry, dried at 130°C, and then rolled to prepare each positive electrode.

A lithium metal electrode was used as a negative electrode, and an electrode assembly was prepared by disposing a porous polyethylene separator between the positive electrode and the negative electrode. A coin-type half-cell was prepared by disposing the electrode assembly in a battery case, and then injecting an electrolyte solution in which 1 M LiPF₆ was dissolved in an organic solvent in which ethylene carbonate (EC) :ethyl methyl carbonate (EMC):diethyl carbonate (DEC) were mixed in a volume ratio of 3:4:3.

A coin-type half-cell including each of the positive electrode active materials prepared in Examples 1 to 8 and Comparative Examples 1 to 6 was charged at a constant current of 0.1 C to 4.65 V at 45°C, and then discharged at 0.1 C to 2.0 V to perform a formation process, and charge and discharge capacities in this case were measured.

Subsequently, the coin-type half-cell was charged at a constant current of 0.1 C to 4.4 V at 25°C, and then discharged at 0.1 C to 2.5 V to measure initial charge and discharge capacities.

Subsequently, a cycle, in which the coin-type half-cell was charged at a constant current of 0.33 C to 4.4 V at 25°C and then discharged at 0.33 C to 2.5 V, was set as one cycle, a total of 50 cycles of charging and discharging were repeated, charge and discharge capacities were measured, and capacity retention relative to the initial charge and discharge capacities was then measured.

The charge and discharge capacities and capacity retention measured at each stage are presented in Table 3 below.

**[Table 3]**

| Category | Formation process | | | Initial charge and discharge | | | Capacity retention (%) |
|---|---|---|---|---|---|---|---|
| | Charge capacity (mAh/g) | Discharge capacity (mAh/g) | Efficie ncy (%) | Charge capacity (mAh/g) | Discharge capacity (mAh/g) | Efficie ncy (%) | |
| Example 1 | 311.4 | 277.6 | 89.1 | 212.9 | 197.9 | 93 | 97.1 |
| Example 2 | 310 | 277 | 89.4 | 212.3 | 197.4 | 93 | 97.3 |
| Example 3 | 307.6 | 276.4 | 89.9 | 210.9 | 195.4 | 92.6 | 97.2 |
| Example 4 | 298.4 | 269 | 90.2 | 206 | 190.1 | 92.3 | 97.2 |
| Example 5 | 298.3 | 268.1 | 89.9 | 209 | 194.4 | 93 | 96.8 |
| Example 6 | 299.7 | 273.3 | 91.2 | 210.2 | 197.1 | 93.8 | 96.9 |
| Example 7 | 308.1 | 277.4 | 90 | 212.3 | 197.1 | 92.8 | 97.0 |
| Example 8 | 308.5 | 278.4 | 90.2 | 213 | 196.4 | 92.2 | 96.9 |
| Comparative Example 1 | 304.2 | 272.1 | 89.4 | 213 | 191.8 | 90 | 95.2 |
| Comparative Example 2 | 303.0 | 271.1 | 89.5 | 212.5 | 192.0 | 90.3 | 94.2 |
| Comparative Example 3 | 298.3 | 264.2 | 88.6 | 210 | 190.5 | 90.7 | 93.2 |
| Comparative Example 4 | 296.8 | 272 | 91.6 | 213 | 191 | 89.7 | 93.5 |
| Comparative Example 5 | 302 | 274 | 90.7 | 211.5 | 192 | 90.7 | 94.4 |
| Comparative Example 6 | 273 | 255 | 93.4 | 202 | 175 | 86.6 | 82.5 |

Referring to FIG. 1, it may be confirmed that the positive electrode active material prepared in Example 1 was in a form of a spherical secondary particle which was formed by aggregation of tens to hundreds of primary particles. In addition, referring to Table 3, it may be confirmed that the batteries including the positive electrode active materials of Examples 1 to 8 not only had excellent charge and discharge capacities, but also had significantly improved initial efficiencies and capacity retentions in comparison to the batteries including the positive electrode active materials of Comparative Examples.

Accordingly, it may be understood that, in a case in which the lithium-rich manganese-based oxide had the composition represented by Formula 1 as in the present invention, the charge/discharge capacity, initial efficiency, and discharge capacity retention of the battery including the positive electrode active material may be improved.

## Claims

1. A positive electrode active material comprising a lithium-rich manganese-based oxide having a composition represented by Formula 1:
[Formula 1] Li₁₊ₐ₁Mnₓ₁Ni_{y1}m_{z1}O_{2+b1}
wherein, in Formula 1,
0.100≤a1≤0.400, 0≤b1<1.0, 0.50≤x1<1.0, 0<y1<0.50, 0.001≤z1≤0.01, and 1.50≤x1/y1, and
M is a metal with an oxidation number of +5 or +6.

2. The positive electrode active material of claim 1, wherein x1 is 0.55 or more.

3. The positive electrode active material of claim 1, wherein z1 is in a range of 0.002 to 0.009.

4. The positive electrode active material of claim 1, wherein x1/y1 is 1.80 or more.

5. The positive electrode active material of claim 1, wherein the lithium-rich manganese-based oxide is cobalt-free (Co-Free).

6. The positive electrode active material of claim 1, wherein M is at least one selected from Mo, Nb, Ti, V, W, Ta, and Ru.

7. The positive electrode active material of claim 1, wherein the lithium-rich manganese-based oxide has an average particle diameter (D₅₀) of 1 µm to 15 µm.

8. The positive electrode active material of claim 1, wherein, in a case in which Formula 1 is expressed as Formula 2, a ratio of x:(1-x) is in a range of 1:9 to 5:5:
[Formula 2] xLi₂MnO₃·(1-x)Li(Niₓ₂Mn_{y2}M_{z2})O₂
wherein, in Formula 2,
0.100≤x≤0.400, 0<x2≤0.55, 0.10≤y2<1.0, 0<z2≤0.015,and x2+y2+z2=1, and
M is a metal with an oxidation number of +5 or +6.

9. A positive electrode comprising the positive electrode active material of any one of claims 1 to 8.

10. A lithium secondary battery comprising the positive electrode of claim 9.
